# EUROPEAN PATENT APPLICATION

(11) **EP 4 814 830 A1**
(43) Date of publication of application: **30.09.2026**
(21) Application number: 25225987.4
(22) Date of filing: 19.12.2025
(51) Int. Cl.: G06Q 10/0639, G06Q 10/20, G06Q 50/04, G06T 7/00, B64F 5/10, B64F 5/60, G06V 10/10

(54) **COMPUTER-AUTOMATED IMAGE-BASED INSPECTION OF AN AIRCRAFT STRUCTURE**

(30) Priority: 24.03.2025 US 202519088220
(71) Applicant: The Boeing Company, Arlington, VA 22202 (US)
(72) Inventor: CHANG, Kwok Tung, 22202 Arlington (US); OH, Jung-Hyun, 22202 Arlington (US); BLANCO, José Antonio, 22202 Arlington (US); KILVERT, Brenda Lee, 22202 Arlington (US); SONG, Wanbin, 22202 Arlington (US); SCHMITT, Steven, 22202 Arlington (US); KOH, Heekyung, 22202 Arlington (US); KIM, Dayoung, 22202 Arlington (US); BEST III, Donald Joe, 22202 Arlington (US)
(74) Representative: St Clair Jones, Gregory Arthur Langley

(57) **Abstract**

Examples are disclosed that relate to a computer-automated, vision-based approach for inspecting an aircraft structure to track a condition of assembly. In one example, a build plan for an aircraft structure is received. Images of the aircraft structure are received. A stitched image of the aircraft structure is generated based on the images and the build plan. Regions of interest (ROIs) of the stitched image are determined. For each of the ROIs, the ROI is input into an object detection machine learning model to identify actual locations of actual holes, tacks, and/or fasteners on the aircraft structure in the corresponding ROI. A condition of assembly report is generated that includes discrepancies between the actual locations and expected locations specified in the build plan. Event notification(s) that indicate remedial action(s) to be taken based on the discrepancies are generated based on the condition of assembly report. The event notification(s) are output.

## Description

### FIELD

The present disclosure relates generally to inspecting an aircraft structure, and in particular, inspecting a condition of assembly of the aircraft structure in a computer-automated manner.

### BACKGROUND

During assembly of an aircraft, an aircraft structure, such as a wing or a fuselage, is inspected to verify that all components and systems meet specific criteria before they are assembled into a larger structure. The results of such inspections are documented in a condition of assembly (CoA) report that ensures that the aircraft complies with regulatory standards, design specifications, and safety requirements. More particularly, the CoA report is used to identify discrepancies between the actual aircraft structure and a build plan for the aircraft structure.

Conventionally, an aircraft structure that is being assembled is manually inspected by a human inspector that compares the aircraft structure to a paper hardcopy of the build plan for the aircraft structure. More particularly, in one example, the human inspector can check that the correct amount, type, and location of holes, tacks, and/or fasteners are installed on the aircraft structure as specified by the build plan. By inspecting the aircraft structure to check that the holes, tacks, and/or fasteners are installed on the aircraft structure as specified by the build plan, the aircraft structure can be maintained within the specifications of the build plan throughout the assembly process. The human inspector would manually document the results of the inspection in a corresponding hardcopy of a CoA report for the aircraft structure. This conventional approach for manually inspecting an aircraft structure and manually creating a corresponding CoA report documenting the results of the inspection consumes a significant amount of time that leads to extended downtime between steps in the process of assembling the aircraft and adds to the overall cost of the aircraft. Moreover, this conventional approach for manually inspecting the aircraft structure that is performed by a human inspector can be error prone, which can lead to additional delays in assembly of the aircraft as well as issues with build quality of the aircraft.

### SUMMARY

Examples are disclosed that relate to a computer-automated, vision-based approach for inspecting an aircraft structure to track a condition of assembly. In one example, a build plan for an aircraft structure specifying a plurality of expected locations of an expected plurality of holes, tacks, and/or fasteners on the aircraft structure is received. A plurality of digital images of the aircraft structure is received from one or more cameras. A stitched digital image of the aircraft structure is generated via a stitched digital image generation module based at least on the plurality of digital images and the build plan. A plurality of regions of interest (ROIs) of the stitched digital image is determined. For each of the plurality of ROIs, the corresponding ROI is input into an object detection machine learning (ML) model to thereby identify a plurality of actual locations of a plurality of actual holes, tacks, and/or fasteners on the aircraft structure in the corresponding ROI. A condition of assembly report is generated for the aircraft structure that includes discrepancies between the plurality of actual locations and the plurality of expected locations. One or more event notifications are generated for the aircraft structure based at least on the condition of assembly report. The one or more event notifications indicate one or more remedial actions to be taken based at least on the discrepancies. The one or more event notifications are output.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 schematically shows an example computing environment in which a computer-automated, vision-based approach for inspecting an aircraft structure to track a condition of assembly is implemented, according to one embodiment of the present disclosure.
FIG. 2 schematically shows an example process of generating a stitched digital image of an aircraft structure, according to one embodiment of the present disclosure.
FIG. 3 schematically shows an example process of generating a plurality of regions of interest (ROIs) of the stitched digital image of the aircraft structure shown in FIG. 2, according to one embodiment of the present disclosure.
FIG. 4 shows an example condition of assembly (CoA) report that is generated for an aircraft structure, according to one embodiment of the present disclosure.
FIG. 5 shows an example masked digital image of an ROI of the aircraft structure shown in FIG. 2 in which discrepancies between a plurality of actual locations and a plurality of expected locations of a plurality of holes, tacks, and/or fasteners on the aircraft structure are highlighted with visual markers.
FIGS. 6-7 show an example computer-implemented method for inspecting a condition of assembly of an aircraft structure, according to one embodiment of the present disclosure.
FIG. 8 schematically shows an example computing system that is representative of any of the computing systems in the computing environment shown in FIG. 1.

### DETAILED DESCRIPTION

Conventional manual inspection of an aircraft structure that is performed by one or more human inspectors is time consuming and can be error prone, which can lead to additional delays in assembly of the aircraft as well as issues in build quality of the aircraft. Further, the conventional approach of manually generating a corresponding condition of assembly (CoA) report documenting the results of the manual inspection consumes a significant amount of time. These conventional manual inspection and documentation approaches lead to extended downtime between steps in the process of assembling the aircraft and add to the overall cost of the aircraft.

Accordingly, to address these and other issues discussed herein, examples are disclosed that relate to a computer-automated, vision-based approach for inspecting an aircraft structure to track a CoA. In one example, a plurality of digital images of a large aircraft structure, such as an airplane wing or a fuselage, are used to generate a stitched digital image of the aircraft structure. A plurality of regions of interest (ROIs) of the stitched digital image is determined. For each of the plurality of ROIs, the corresponding ROI is input into an object detection machine learning (ML) model to thereby identify a plurality of actual locations of a plurality of actual holes, tacks, and/or fasteners on the aircraft structure in the corresponding ROI. A CoA report is generated for the aircraft structure that includes discrepancies between the plurality of actual locations of a plurality of actual holes, tacks, and/or fasteners on the aircraft structure and a plurality of expected locations of an expected plurality of holes, tacks, and/or fasteners on the aircraft structure specified in a build plan of the aircraft structure. One or more event notifications are generated for the aircraft structure based at least on the CoA report. The one or more event notifications indicate one or more remedial actions to be taken based at least on the discrepancies. The one or more event notifications are output.

The computer-automated, vision-based approach for inspecting an aircraft structure disclosed herein provides a simple, fast, reliable, and non-invasive approach to automate, detect, and inspect drilling and fastening operations that are performed during assembly of an aircraft structure. Moreover, this approach leverages use of a ML model that is specifically trained to identify open holes, tacks, and/or fasteners on the aircraft structure, count them, and compare them against the build plan for the aircraft structure to produce a CoA report in an automated manner that is generated faster, with greater accuracy, and is more robust than conventional manual inspection and documentation approaches.

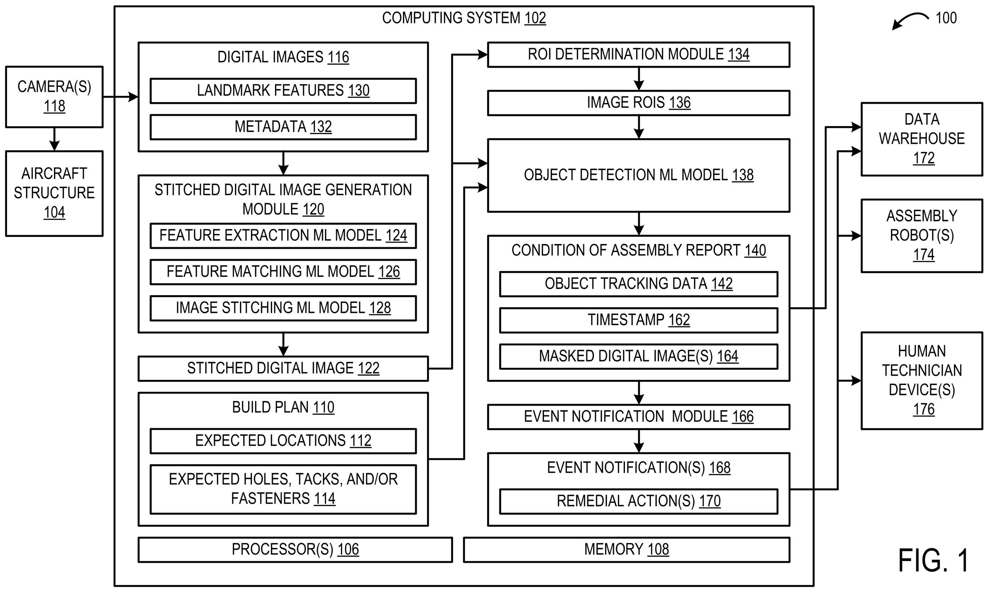

FIG. 1 schematically shows an example computing environment 100 in which a computing system 102 is configured to perform a computer-automated, vision-based approach for inspecting an aircraft structure 104 to track a CoA.

The aircraft structure 104 can include any suitable aircraft component or assembly. Typically, the aircraft structure 104 is large enough that the entire structure cannot be captured in a single digital image with enough resolution to capture all of the features that are tracked via inspection for the CoA. In some examples, the aircraft structure 104 includes a fuselage of an aircraft. In other examples, the aircraft structure 104 includes a wing of an aircraft. In still other examples, the aircraft structure 104 includes another large-scale component of the aircraft.

The computing system 102 comprises one or more processors 106 configured to execute instructions stored in memory 108 to perform computing operations related to the computer-automated, vision-based approach for inspecting the aircraft structure 104 disclosed herein. In one example, the one or more processors 106 are configured to execute instructions stored in memory 108 to receive a build plan 110 for the aircraft structure 104 that specifies a plurality of expected locations 112 of an expected plurality of holes, tacks, and/or fasteners 114 on the aircraft structure 104. In some examples, the build plan 110 includes hole-based layout features that are specific attributes or characteristics related to holes in structural components, such as fastener holes, rivet holes, or bolt holes. These hole-based layout features provide references for aligning and joining parts of the aircraft structure 104. A precise number, sequence, placement, and drilling of holes (and/or tacks / fasteners) on the aircraft structure 104 are critical for maintaining tolerances and structural integrity. The size, shape, and spacing of holes affect the load distribution and strength of joints. The hole-based layout features streamline the assembly process by allowing automated drilling and inspection systems to locate and work with predefined positions of the expected plurality of holes, tacks, and/or fasteners 114 on the aircraft structure 104.

The one or more processors 106 are configured to execute instructions stored in memory 108 to receive a plurality of digital images 116 of the aircraft structure 104 from one or more cameras 118. In some examples, the camera(s) 118 include a plurality of cameras that are positioned throughout a facility in which the aircraft structure 104 is being assembled. In some examples, at least one of the camera(s) 118 include a camera in a fixed position (e.g., X, Y, Z) and/or orientation (e.g., Pitch, Roll, Azimuth). For example, a plurality of cameras can be positioned at different locations along an assembly line for the aircraft structure 104, and the aircraft structure 104 can move relative to the plurality of cameras as the aircraft structure 104 is being assembled.

In some examples, at least one of the camera(s) 118 include a camera that is movable to different positions and/or orientations. In some examples, the moveable camera is attached to a robot that moves to different locations in a facility where the aircraft structure 104 is being assembled. In other examples, the moveable camera is attached to a robotic arm that can adjust a position and/or orientation of the camera to capture digital images 116 of the aircraft structure 104 from different perspectives. In still other examples, the moveable camera can include a hand-held camera that is held by a human operator to capture digital images 116 of the aircraft structure 104 from different perspectives.

In some examples, the camera(s) 118 include cameras that are already in use for other purposes related to assembling the aircraft structure 104 beyond just inspection for CoA. For example, the camera(s) 118 can be already employed for use by human operators to view the aircraft structure 104 while manually controlling a drill machine, or to oversee a robot performing automated drilling on the aircraft structure 104. By employing camera(s) that are already being used for other purposes related to assembly of the aircraft structure 104, the computer-automated, vision-based CoA inspection approach can be implemented in a manner that is non-invasive or otherwise minimally interferes with assembly operations performed on the aircraft structure 104.

The camera(s) 118 can take any suitable form. For example, the camera(s) 118 can include one or more of visible light cameras, depth cameras, LIDAR sensors, another suitable type of camera, or a combination thereof.

In some embodiments, the camera(s) 118 are configured to capture a sequence of the digital images 116 in the form of a video stream, and the plurality of digital images 116 can be extracted from the video stream. In other embodiments, the video stream is processed and analyzed collectively in whole, however this would consume greater computing resources than processing and analyzing a subset of digital images extracted from the video stream.

Typically, the aircraft structure 104 is considerably sizeable, enough that it is unwieldly to capture the entirety of the aircraft structure 104 (or at least a region of the aircraft structure 104 that is under inspection for CoA) in a single digital image that has a high enough image resolution that a plurality of holes, tacks, and/or fasteners are perceivable with enough detail to be inspected via computer-automation to assess the CoA of the aircraft structure 104. Accordingly, the computing system 102 is configured to generate a stitched digital image 122 based at least on the plurality of digital images 116 of the aircraft structure 104 that shows the plurality of holes, tacks, and/or fasteners of the aircraft structure 104 with a suitably high enough image resolution to be inspected via computer-automation to assess the CoA of the aircraft structure 104.

In one example, the processor(s) 106 are configured to execute instructions stored in memory 108 to execute a stitched digital image generation module 120 that is configured to generate a stitched digital image 122 of the aircraft structure 104 based at least on the plurality of digital images 116 and the build plan 110. More particularly, the stitched digital image generation module 120 may use the build plan 110 as a reference to verify that the entirety of the aircraft structure 104 (or at least the region of the aircraft structure 104 that is under inspection for CoA) is captured by the plurality of digital images 116 and that the stitched digital image 122 includes the entirety of the aircraft structure 104 (or at least the region of the aircraft structure 104 that is under inspection for CoA).

In some embodiments, the stitched digital image generation module 120 executes one or more machine learning (ML) models that are trained to perform various computing operations related to generating the stitched digital image 122. In one example, the stitched digital image generation module 120 is configured to execute a feature extraction ML model 124, a feature matching ML model 126, and an image stitching ML model 128.

The feature extraction ML model 124 is configured to identify and extract features including aircraft-specific features as well as more primitive features from the plurality of digital images 116 and generate descriptors for the extracted features.

The feature extraction ML model 124 can be trained using different training approaches. In one example, the feature extraction ML model 124 is trained using supervised learning based at least on a set of training data that includes digital images of a plurality of different aircraft structures that are labeled with aircraft-specific features and hole-based layout features that are common features of aircraft structures that are inspected for CoA. For example, the aircraft-specific features and hole-based layout features can include wing edges, fuselage curvatures, seams between panels, tooling features, hole-based layout feature markings, and other aircraft-specific features. By training the feature extraction ML model 124 with labeled training data that is specific to aircraft structures, the feature extraction ML model 124 can more accurately identify features in the plurality of digital images 116 that are specific to the aircraft structure 104. In other examples, the feature extraction ML model 124 is trained using unsupervised learning in which the training data includes digital images of aircraft structures without labels, and unsupervised techniques are applied to refine the latent space representation of the training data into meaningful and compressed representations that capture the underlying structure or patterns in the training data. Further the feature extraction ML model 124 can be trained using self-supervised learning techniques that can involve generating pseudo-labels or auxiliary objectives to structure the latent space representation of the training data.

The feature extraction ML model 124 can be implemented using various types of ML models. In one example, the feature extraction ML model 124 is implemented using a Convolutional Neural Network (CNN). In another example, the feature extraction ML model 124 is implemented using a specialized deep learning model, such as D2-Net, R2D2, or SuperPoint. In yet another example, the feature extraction ML model 124 is implemented using a hybrid approach of deep learning-based methods combined with traditional neural network approaches to further enhance feature extraction from the plurality of digital images 116. In still other examples, the feature extraction ML model 124 is implemented using a different type of ML model.

The feature matching ML model 126 is configured to receive features that are extracted by the feature extraction ML model 124 from the plurality of digital images 116 and corresponding descriptors. The feature matching ML model 126 is configured to match the extracted features between different digital images of the plurality of digital images 116 by comparing descriptors. The extracted features matched between digital images are used to identify which digital images correspond to which parts of the aircraft structure in order to properly align the plurality of digital images 116 to form the stitched digital image 122.

The feature matching ML model 126 can be implemented using various types of ML models. In one example, the feature matching ML model 126 is implemented using a deep learning model (e.g., SuperGlue, LoFTR). In other examples, the feature matching ML model 126 is implemented using a different type of ML model. In yet other examples, the stitched digital image generation module 120 may perform feature matching using classical distance-based matching techniques, such as scale-invariant feature transform (SIFT) and speeded-up robust feature (SURF) techniques.

In some embodiments, the accuracy of feature matching can be enhanced based at least on features of the camera(s) 118 that are used to capture the plurality of digital images 116. In some embodiments, the camera(s) 118 are configured to project a plurality of landmark features 130 on the aircraft structure 104. The plurality of landmark features 130 are captured in the plurality of digital images 116 of the aircraft structure 104. The stitched digital image generation module 120 is configured to generate the stitched digital image 122 of the aircraft structure 104 based at least on aligning the landmark features 130 between neighboring digital images of the plurality of digital images 116. In embodiments where the feature matching ML model 126 is employed for feature matching, the feature matching ML model 126 is configured to match the landmark features 130 between neighboring digital images of the plurality of digital images 116.

The image stitching ML model 128 is configured to generate the stitched digital image 122 based at least on aligning digital images having matched features of the plurality of digital images 116. In one example, the image stitching ML model 128 is configured to generate the stitched digital image 122 by computing the transformation matrix (e.g., homography) between digital images of the plurality of digital images 116 using the matched features output by the feature matching ML model 126. Further, the image stitching ML model 128 is configured to warp the digital images as needed to align with one another. In some embodiments, the image stitching ML model 128 is configured to use blending techniques to produce a smooth transition between digital images. In some embodiments, the image stitching ML model 128 is configured to match textures and colors between stitched images. In some embodiments, the image stitching ML model 128 is configured to correct parallax issues that can occur when objects at different depths appear misaligned in overlapping digital images.

In some embodiments, the digital image generation module 120 can enhance the accuracy of the stitched digital image 122 based at least on using metadata 132 associated with the plurality of digital images 116. In some examples, the metadata 132 can include camera position and/or orientation data indicating the position and/or orientation of the camera when a digital image is captured by the camera. The camera position and/or orientation data can be used by the feature matching ML model 126 to help with feature matching between digital images of the plurality of digital images 116. Further, the camera position and/or orientation data can be used by the image stitching ML model 128 to align different digital images of the plurality of digital images 116 to generate the stitched digital image 122. In some embodiments, the metadata 132 includes depth data provided by a depth camera or a LIDAR sensor. The depth data can be used by the feature extraction ML model 124 to identify the position of features in the plurality of digital images 116 based at least on the depth of the features in the digital images.

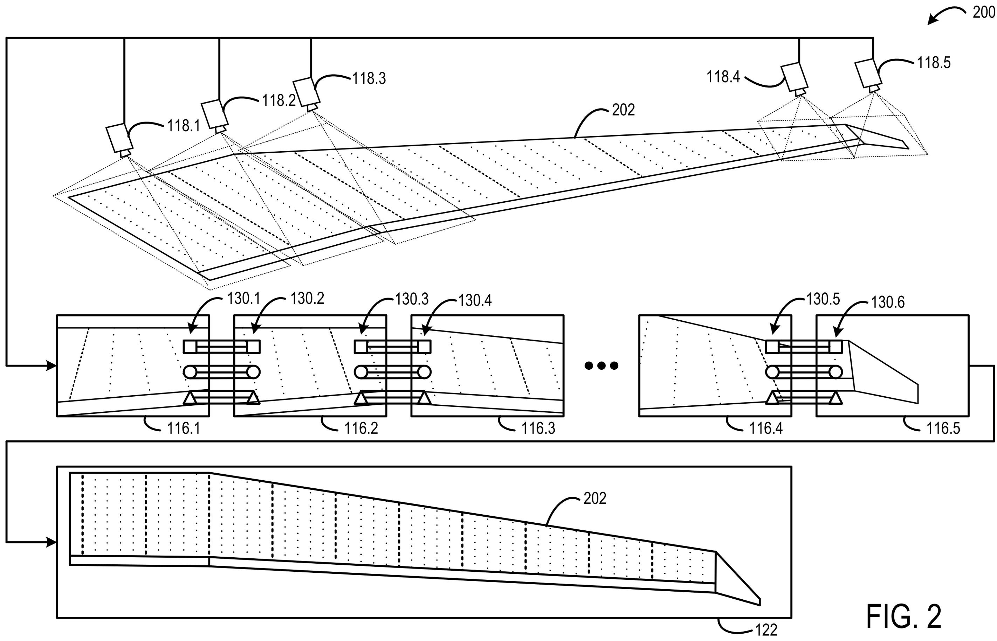

FIG. 2 schematically shows an example process 200 of generating a stitched digital image of an aircraft structure, according to one embodiment of the present disclosure. In the illustrated process 200, the aircraft structure being inspected for CoA is an aircraft wing 202. The aircraft wing 202 is large enough that it cannot be easily captured by a single camera with high enough image resolution to capture all of the holes, tacks, and/or fasteners on the aircraft wing 202. Rather, a plurality of cameras 118 (e.g., 118.1, 118. 2, 118.3, 118.4, 118.5) capture a plurality of digital images 116 (e.g., 116.1, 116. 2, 116.3, 116.4, 116.5) of different regions of the aircraft wing 202. For example, the plurality of cameras 118 can be positioned throughout a facility in which the aircraft wing 202 is being assembled.

In the illustrated embodiment, the plurality of cameras 118 are configured to project a plurality of landmark features 130 on the aircraft wing 202. The plurality of landmark features 130 are captured in the plurality of digital images 116 of the aircraft wing 202. For example, a first set of landmark features 130.1 are captured in a first digital image 116.1, a second set of landmark features 130.2 are captured in a second digital image 116.2, a third set of landmark features 130.3 are captured in a third digital image 116.3, a fourth set of landmark features 130.4 are captured in a fourth digital image 116.4., a fifth set of landmark features 130.5 are captured in a fifth digital image 116.5, and a sixth set of landmark features 130.6 are captured in a sixth digital image 116.6.

The stitched digital image generation module 120 shown in FIG. 1 is configured to generate a stitched digital image 122 of the aircraft wing 202 based at least on aligning the landmark features 130 between neighboring digital images of the plurality of digital images 116. More particularly, the landmark features 130 provide features that can be used to align neighboring digital images during the digital image stitching process.

The stitched digital image 122 includes the entirety of the aircraft wing 202 (or at least a region of the aircraft wing that is under inspection for CoA) including all of the holes, tacks, and/or fasteners that are to be inspected for CoA. The stitched digital image 122 is then used for computer-automated inspection to determine the CoA of the aircraft wing 202.

Returning to FIG. 1, in some embodiments, the processor(s) 106 are configured to execute instructions stored in memory 108 to execute a region of interest (ROI) determination module 134. The ROI determination module 134 is configured to receive the stitched digital image 122 output from the stitched digital image generation module 120 and determine a plurality of ROIs 136 of the stitched digital image 122 that are to be visually inspected for CoA. The stitched digital image 122 can be sliced / sub-divided into the plurality of ROIs 136 that can be visually inspected separately for CoA, which is overall more computing resource efficient than visually inspecting the entire stitched digital image 122 all at once. Moreover, the accuracy of identifying the locations of holes, tacks, and/or fasteners on the aircraft structure 104 can be increased when limiting the visual inspection area to an ROI relative to visually inspecting the entire stitched digital image 122. However, in some embodiments, the entire stitched digital image 122 can be visually inspected for CoA without being sliced / sub-divided into a plurality of ROIs.

The plurality of ROIs 136 can be designated to be any suitable size that is smaller than the stitched digital image 122. In some examples, each of the plurality of ROIs 136 is set to the same designated size / dimensions. In one example, the ROIs 136 are 400 x 400 pixel squares. In other examples, the ROIs 136 are a different designated size / dimensions. In still other examples, the ROIs 136 can be different sizes / dimensions. In some such examples, the ROIs 136 can be selected dynamically by the ROI determination module 134 based at least on expected locations of expected features on the aircraft structure 104 as specified by the build plan 110. In some examples, each of the plurality of ROIs 136 do not overlap with one another. In other examples, at least one of the ROIs 136 at least partially overlaps with at least one other of the ROIs 136.

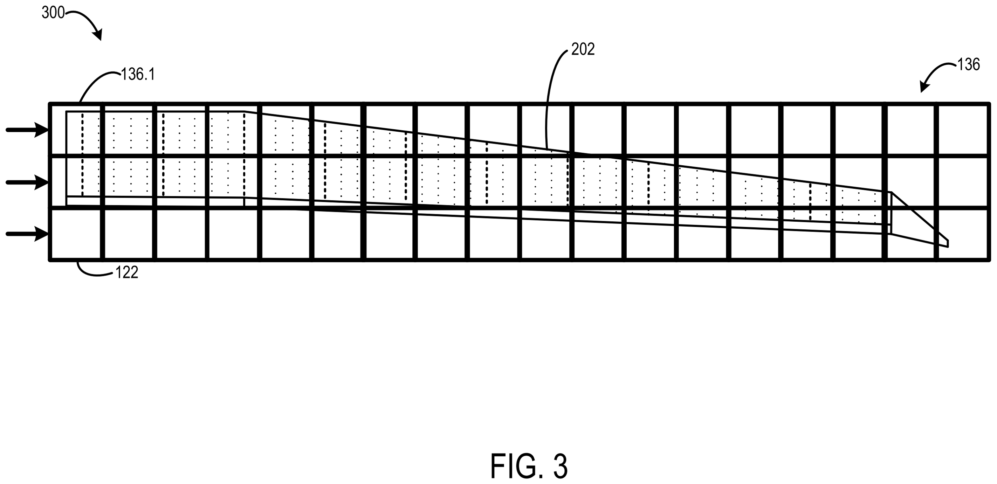

FIG. 3 schematically shows an example process 300 of generating a plurality of ROIs of the stitched digital image 122 of the aircraft wing 202 shown in FIG. 2, according to one embodiment of the present disclosure. In the illustrated example, the plurality of ROIs 136 are all the same size squares that do not overlap with each other. The ROI determination module 134 aligns a first ROI 136.1 with the upper left corner of the stitched digital image 122 and then moves from left to right across the stitched digital image 122 slicing / sub-dividing it into the ROIs 136. The ROI determination module 134 continues to slice / sub-divide the stitched digital image 122 until the bottom right corner is reached and the entire stitched digital image 122 is sliced / sub-divided into the plurality of ROIs 136. In some examples, each of the plurality of ROIs 136 is indexed to identify a position of the corresponding ROI within the stitched digital image 122 and/or relative to the other ROIs within the stitched digital image 122. The process 300 of generating the plurality of ROIs of the stitched digital image 122 is provided as a non-limiting example. In other examples, the stitched digital image 122 can be sliced / sub-divided in a different manner.

In some embodiments, the ROI determination module 134 is configured to identify regions of the stitched digital image 122 that are not of interest and can be omitted from inspection for CoA. For example, with reference to the stitched digital image 122 of the aircraft wing 202, the regions of the stitched digital image 122 that do not include the aircraft wing 202, such as regions that only include the background and not the aircraft wing 202, can be identified as not being of interest and can be omitted from being inspected for CoA.

Returning to FIG. 1, the processor(s) 106 are configured to execute instructions stored in memory 108 to execute an object detection ML model 138 that is configured to receive the build plan 110 for the aircraft structure 104 and the plurality of ROIs 136 as input and generate a CoA report 140 based at least on performing visual inspection of the plurality of ROIs 136. The CoA report 140 includes object tracking data 142 for objects identified on the aircraft structure 104 by the object detection ML model 138.

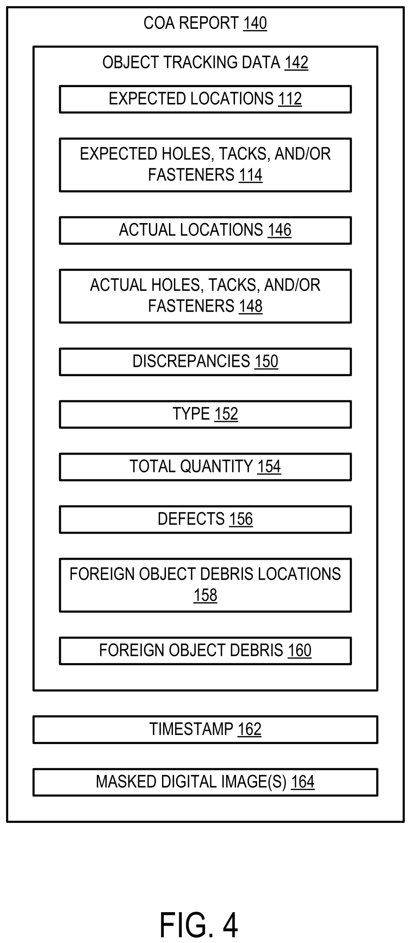

FIG. 4 schematically shows the CoA report 140 of the aircraft structure 104 generated by the object detection ML model 138, according to one embodiment of the present disclosure. The object detection ML model 138 is configured to, for each of the plurality of ROIs 136, identify a plurality of actual locations 146 of a plurality of actual holes, tacks, and/or fasteners 148 on the aircraft structure 104 in the corresponding ROI. In some examples, the actual locations 146 of the plurality of actual holes, tacks, and/or fasteners 148 are represented as pixel groups. In other examples, the actual locations 146 of the plurality of actual holes, tacks, and/or fasteners 148 are represented as point cloud locations. In some embodiments, the expected plurality of holes, tacks, and/or fasteners 114, the corresponding plurality of expected locations 112, the plurality of actual holes, tacks, and/or fasteners 148, and the corresponding plurality of actual locations 146 are listed in the CoA report.

The object detection ML model 138 is configured to compare the plurality of actual locations 140 of the plurality of actual holes, tacks, and/or fasteners 142 to the expected locations 112 of the expected holes, tacks, and/or fasteners 114 specified in the build plan to identify discrepancies 150. For example, the discrepancies 150 can include actual holes, tacks, and/or fasteners being placed in the wrong location, missing actual holes, tacks, and/or fasteners, additional actual holes, tacks, and/or fasteners, actual holes, tacks, and/or fasteners that are a different type than what is expected (e.g., an actual hole instead of an expected fastener). In some embodiments, the discrepancies 150 are listed in the CoA report 140.

In some embodiments, the object detection ML model 138 is configured to identify specific types 152 of the actual holes, tacks, and/or fasteners 148 (e.g., rivet, screw, bolt). In some embodiments, the type 152 of each of the actual holes, tacks, and/or fasteners 148 are listed in the CoA report 140.

In some embodiments, the object detection ML model 138 is configured to track a total quantity 154 of the actual holes, tacks, and/or fasteners 148 identified on the aircraft structure 104. The total quantity 154 can be used to as an overview to quickly assess the high-level CoA of the aircraft structure 104. In some embodiments, the total quantity 154 of the actual holes, tacks, and/or fasteners 148 is listed in the CoA report 140.

In some embodiments, the object detection ML model 138 is further configured to, for each of the plurality of ROIs 136, identify locations 158 of foreign object debris 160 on the aircraft structure 140 in the corresponding ROI. The foreign object debris 160 includes objects that are not expected to be located on the aircraft structure 104. For example, the foreign object debris 160 can include material scraps (e.g., metal shaving in a hole), tools, and other foreign objects (e.g., sealant). In some embodiments, the foreign object debris 160 can also be included in the discrepancies 150. In some embodiments, the identified locations 158 of the foreign object debris 160 on the aircraft structure 104 are listed in the CoA report 140.

In some embodiments, the object detection ML model 138 is further configured to, for each of the plurality of ROIs, identify locations of defects 156 in the plurality of actual holes, tacks, and/or fasteners 148 in the corresponding ROI. The defects can include holes, tacks, and/or fasteners being placed in the wrong location, holes having the wrong shape and/or depth, and/or other defects. In some examples, the object detection ML model 138 is configured to identify defect 156 that include the incorrect fastener type/part number being installed on the aircraft structure 104. In some embodiments, the identified locations 156 of the defects in the actual holes, tacks, and/or fasteners on the aircraft structure 104 are listed in the CoA report 140.

In some embodiments, the CoA report 140 generated by the object detection ML model 138 includes a timestamp 162 that indicates a time when that CoA report is generated. The object detection ML model 138 can be configured to generate CoA reports based at least on different stitched digital images of the aircraft structure 104 at different times, indicated by different timestamps, throughout the assembly process in order to track the CoA of the aircraft structure 104.

In some embodiments, the object detection ML model 138 is further configured to generate one or more masked digital images 164 of the aircraft structure 104 in which at least the discrepancies 150 are highlighted with visual markers. The masked digital image 164 can be displayed to human technicians that are working to assemble the aircraft structure 104 in order to quickly identify the discrepancies 150 and take remedial action to correct the discrepancies 150.

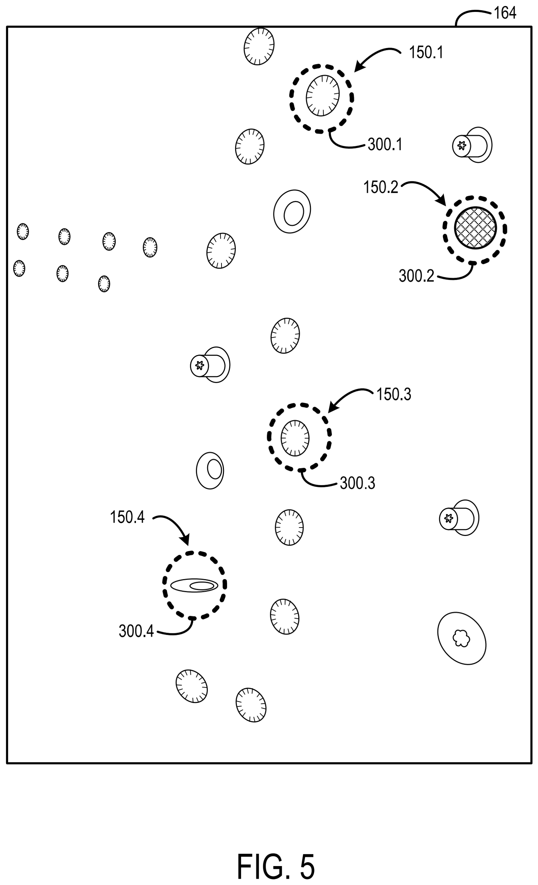

FIG. 5 shows an example masked digital image 164 of an ROI of the stitched digital image 122 of the aircraft wing 202 shown in FIG. 2 in which discrepancies 150 between a plurality of actual locations 148 and a plurality of expected locations 112 of a plurality of holes, tacks, and/or fasteners on the aircraft wing 202 are highlighted with a plurality of visual markers 300 (e.g., 300.1, 300.2, 300.3, 300.4). In the illustrated example, the masked digital image 164 includes actual holes, tacks, and/or fasteners identified by the object detection ML model 138. In some examples, the actual holes, tacks, and/or fasteners can be color coded by type in the masked digital image 164 (e.g., holes shown in red, tacks shown in orange, and fasteners shown in green). The masked digital image 164 includes a plurality of discrepancies 150 (e.g., 150.1, 150.2, 150.3, 150.4) identified by the object detection ML model 138. As one example, a first discrepancy 150.1 is highlighted by a first visual marker 300.1. The first discrepancy 150.1 is identified as a miss-installed fastener that should be a tack. As another example, a second discrepancy 150.2 is highlighted by a second visual marker 300.2. The second discrepancy 150.2 is identified as a location where a hole should be drilled according to the build plan 110, but there is no hole at present. As yet another example, a third discrepancy 150.3 is highlighted by a third visual marker 300.3. The third discrepancy 150.3 is identified as a hole drilled in an incorrect position and/or out of sequence as indicated by the build plan 110. As yet another example, a fourth discrepancy 150.4 is highlighted by a fourth visual marker 300.4. The fourth discrepancy 150.4 is identified as a hole that is defective due to having an oblong shape instead of a round shape.

The masked digital image 164 can include any of the object tracking data 142 identified by the object detection ML model 138 based at least on processing the plurality of ROIs 136 of the stitched digital image 122.

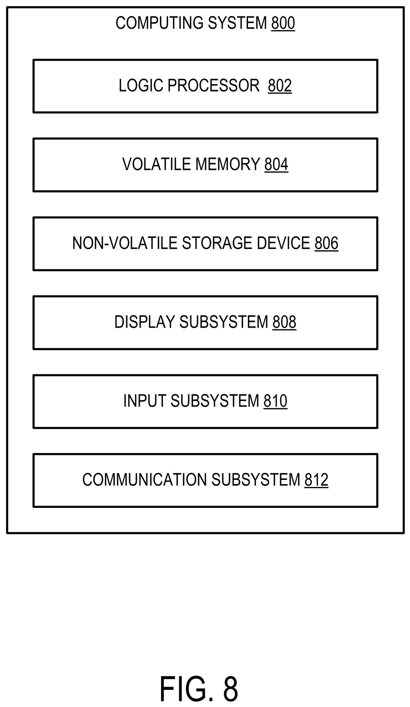

Returning to FIG. 1, the object detection ML model 138 is configured to output the masked digital image(s) 164 to an output device, such as to a display subsystem 808 (shown in FIG. 8) and/or one or more human technician devices 176, so that human technicians that are involved in the process of assembling the aircraft structure 104 can reference the masked digital image(s) 164 when addressing the discrepancies 150 or other issues that are identified by the object detection ML model 138.

The object detection ML model 138 can be implemented using various types of ML models. In one example, the object detection ML model 138 is implemented using a CNN. In some examples, the object detection ML model 138 is implemented as a single-stage object detection model (e.g., YOLO, SSD). In other examples, the object detection ML model 138 is implemented as a two-stage object detection model (e.g., RCNN, Faster R-CNN). In other examples, the object detection ML model 138 is implemented using a semantic segmentation-based model that classifies pixels of an image into object categories (e.g., DeepLab, U-Net). In still other examples, the object detection ML model 138 is implemented using an instance segmentation-based model that detect objects and delineates their pixel-level boundaries (e.g., Mask R-CNN). In still other examples, the object detection ML model 138 can be implemented using a different type of machine learning model.

The processor(s) 106 are configured to execute instructions stored in memory 108 to execute an event notification module 166 that is configured to receive the CoA report 140 generated by the object detection ML model 138. The event notification module 166 is configured to generate one or more event notifications 168 for the aircraft structure 104 based at least on the CoA report 140. The event notification(s) 168 indicate one or more remedial actions 170 to be taken based at least on the discrepancies 150 listed in the CoA report 150. In some examples, the remedial actions 170 are performed to correct the discrepancies 150. In one example where the discrepancy includes identifying that an expected hole is not present at an expected location on the aircraft structure, the remedial action(s) 170 include sending a command to drill a hole at the expected location on the aircraft structure. In other examples, other remedial action(s) 170 can be performed to fix other types of discrepancies identified in the CoA report 140, such as sending a command to replace an incorrect tack / fastener with a correct tack / fastener or sending a command to fill a hole that was incorrectly drilled in the aircraft structure 104.

In embodiments where the object detection ML model 138 is configured to identify defects 156 on the aircraft structure 140, the remedial action(s) 170 include sending a command to fix the defects 156 in the holes, tacks, and/or fasteners at identified locations on the aircraft structure 104. For example, such remedial action(s) 170 to fix the defects 156 can include reshaping a hole, filling in a hole that was drilled incorrectly, or swapping out a broken tack / fastener for a tack / fastener that is in working order.

In embodiments where the object detection ML model 138 is configured to identify foreign object debris 160 on the aircraft structure 104, the remedial action(s) 170 include sending a command to remove the foreign object debris 160 from the identified locations 158.

In some examples, the remedial action(s) 170 are performed to prevent further discrepancies from occurring downstream in the assembly process due to the discrepancies 150 identified in the CoA report 140. In one example where the CoA report 140 identifies a discrepancy 150 that indicates that an expected hole is missing, the remedial action(s) 170 include sending a command to halt a filling operation performed at the expected location of the hole until the hole can be drilled at the expected location. In other examples, other remedial action(s) can be performed to prevent additional downstream discrepancies from occurring.

In some embodiments where the CoA report 140 is generated with a timestamp 162, the event notification module 166 is configured to compare the CoA report 140 for the aircraft structure 104 to a prior CoA report (not shown) for the aircraft structure 104 with an earlier timestamp to verify that prior discrepancies identified in the prior CoA report have been corrected since the prior CoA report was generated. The event notification module 166 is configured to generate one or more additional event notifications indicating one or more additional remedial actions to correct the prior discrepancy based on identifying that the prior discrepancy has not been corrected. The event notification module 166 is configured to generate an event notification including a verification that the prior discrepancy was corrected based on identifying that the prior discrepancy was corrected in the current CoA report 140. This feature provides the ability to track the current "as-built" condition of the aircraft structure 104 throughout the assembly process and provides validation feedback as data retention to mitigate quality escapement due to discrepancies that can occur during the assembly process.

The event notification module 166 is configured to output the event notification(s) 168 to different sources. In some embodiments, the event notification module 166 is configured to output the event notification(s) 168 to a data warehouse 170 that is configured to store the event notification(s) 170. In such embodiments, the object detection ML model 138 is also configured to output the CoA report 140 to the data warehouse 172. The data warehouse 172 is configured to store the CoA report 140 (and other CoA reports for the aircraft structure 104 that are generated throughout the assembly process) and the event notification(s) 170 for the aircraft structure 104 in memory (e.g., in a database). The CoA reports and the event notifications are stored in the data warehouse 172, so that the information can be referenced as part of the feedback / verification that feature to ensure that identified discrepancies and/or defects are corrected, and/or foreign object debris is removed from the aircraft structure. Further, the CoA reports and the event notifications are stored in the data warehouse 172, so that the information can be referenced to audit and improve the assembly process that is used to assemble aircraft structures in the future.

In some embodiments, the event notification module 166 is configured to output the event notification(s) 168 to one or more assembly robots 174. The assembly robot(s) 174 are configured to perform computer-automated operations related to assembly of the aircraft structure 104, such as drilling and filling holes, correcting defects, and removing foreign object debris. The assembly robot(s) 174 are configured are configured to perform the remedial action(s) 170 specified in the event notification(s) 168. In this way, the discrepancies 150 identified by the object detection ML model 138 can be corrected automatically by the assembly robot(s) 174 with minimal or no human intervention.

In some embodiments, the assembly robot(s) 174 are configured are configured to send confirmation notifications to the computing system 102 based at least on completing the remedial action(s) 170 specified in the event notification(s) 168. The confirmation notification can be sent to the event notification module 166 as part of the process to track whether a discrepancy is corrected.

In some embodiments, the event notification module 166 is configured to output the event notification(s) 168 to the one or more human technician devices 176 (e.g., handheld computing device, smartphone, tablet computer). The human technician device(s) 176 can present the event notification(s) 168 including the remedial action(s) 170 to associated human technicians, so that the human technicians can manually perform the remedial action(s) 170 in scenarios where the assembly robot(s) 174 are unable to perform the remedial action(s) 170 in a computer-automated manner.

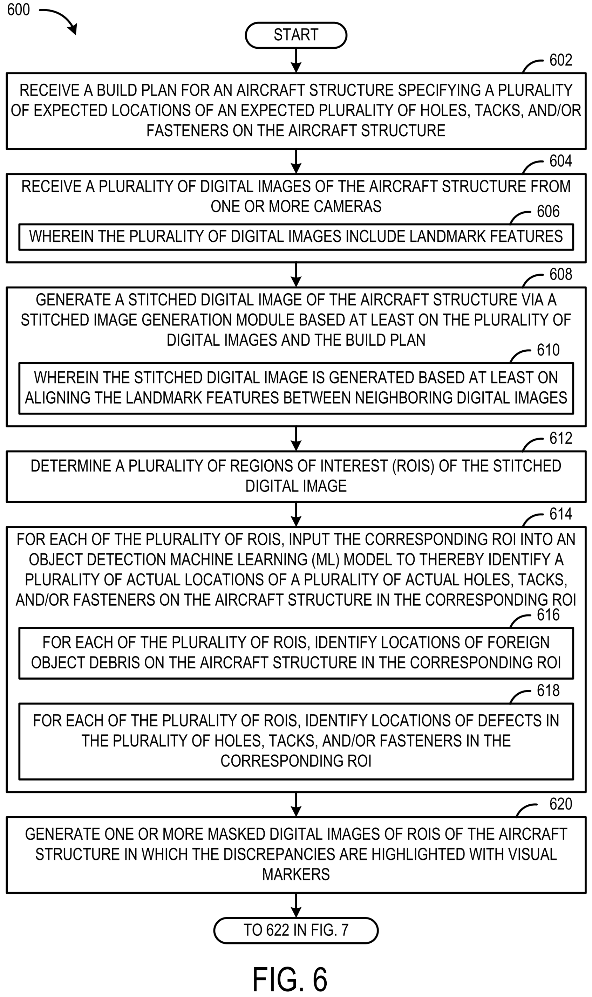

FIGS. 6-7 show an example computer-implemented method 600 for inspecting a condition of assembly of an aircraft structure, according to one embodiment of the present disclosure. For example, the method 600 can be performed by the computing system 102 shown in FIG. 1 or another suitable computing system.

At 602, the method 600 includes receiving a build plan for an aircraft structure specifying a plurality of expected locations of an expected plurality of holes, tacks, and/or fasteners on the aircraft structure. At 604, the method 600 includes receiving a plurality of digital images of the aircraft structure from one or more cameras. In some embodiments, at 606, the one or more cameras can be configured to project a plurality of landmark features on the aircraft structure, and the plurality of landmark features can be captured in the plurality of digital images of the aircraft structure. At 608, the method 600 includes generating a stitched digital image of the aircraft structure via a stitched digital image generation module based at least on the plurality of digital images and the build plan. In some embodiments, at 610, the stitched digital image can be generated based at least on aligning the landmark features between neighboring digital images. At 612, the method 600 includes determining a plurality of regions of interest (ROIs) of the stitched digital image. At 614, the method 600 includes for each of the plurality of ROIs, inputting the corresponding ROI into an object detection machine learning (ML) model to thereby identify a plurality of actual locations of a plurality of actual holes, tacks, and/or fasteners on the aircraft structure in the corresponding ROI. In some embodiments, at 616, the method 600 can include, for each of the plurality of ROIs, identifying locations of foreign object debris on the aircraft structure in the corresponding ROI. In some embodiments, at 618, the method 600 can include, for each of the plurality of ROIs, identifying locations of defects in the plurality of holes, tacks, and/or fasteners in the corresponding ROI. In some embodiments, at 620, the method 600 can include generate one or more masked digital images of ROIs of the aircraft structure in which the discrepancies are highlighted with visual markers.

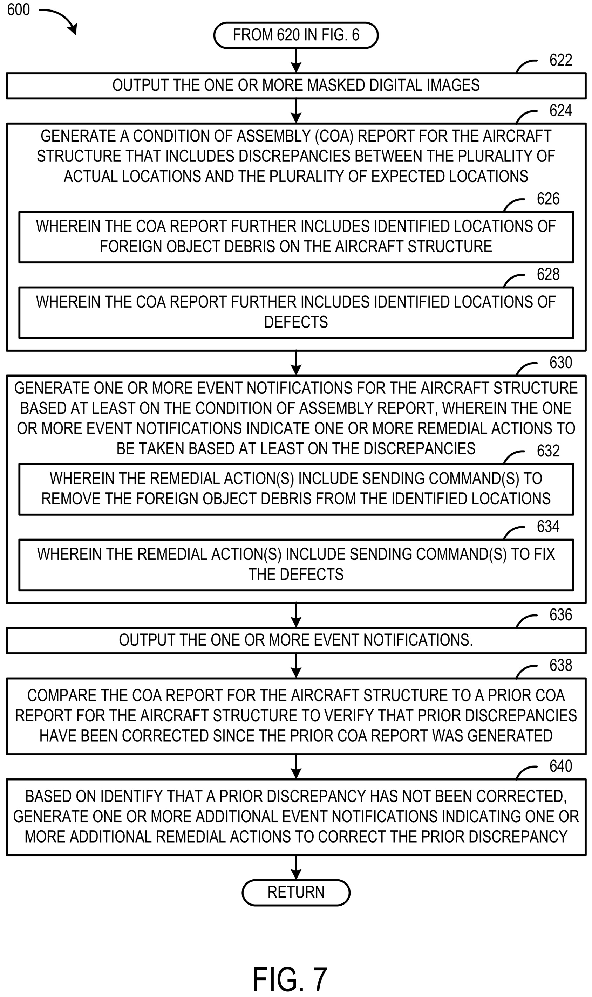

In FIG. 7, in some embodiments, at 622, the method 600 can include outputting the one or more masked digital images. At 624, the method 600 includes generating a condition of assembly (CoA) report for the aircraft structure that includes discrepancies between the plurality of actual locations and the plurality of expected locations. In some embodiments, at 626, the CoA report further includes identified locations of foreign object debris on the aircraft structure. In some embodiments, at 628, the CoA report further includes identified locations of defects in the holes, tacks, and/or fasteners on the aircraft structure. At 630, the method 600 includes generating one or more event notifications for the aircraft structure based at least on the condition of assembly report, wherein the one or more event notifications indicate one or more remedial actions to be taken based at least on the discrepancies. In some embodiments, at 632, the one or more remedial actions include sending one or more commands to remove the foreign object debris from the identified locations on the aircraft structure. In some embodiments, at 634, the one or more remedial actions include sending one or more commands to fixing the defects in the holes, tacks, and/or fasteners at the identified locations on the aircraft structure. At 636, the method 600 includes outputting the one or more event notifications. In some embodiments, at 638, the method 600 can include comparing the CoA report for the aircraft structure to a prior CoA report for the aircraft structure to verify that prior discrepancies have been corrected since the prior CoA report was generated. In some embodiments, at 640, the method 600 can include, based on identify that a prior discrepancy has not been corrected, generating one or more additional event notifications indicating one or more additional remedial actions to correct the prior discrepancy.

The method 600 can be performed to provide a computer-automated, vision-based approach for inspecting an aircraft structure in a simple, fast, reliable, and non-invasive manner. Moreover, the method 600 leverages use of a ML model that is specifically trained to identify open holes, tacks, and/or fasteners on the aircraft structure, count them, and compare them against the build plan for the aircraft structure to produce a CoA report in an automated manner that is generated faster, with greater accuracy, and is more robust than conventional manual inspection and documentation approaches. Further, event notifications including remedial actions are output that can be performed to correct the discrepancies identified in the CoA report. Such remedial actions can be performed in an automated manner in some embodiments to minimize human interaction throughout the process.

In some embodiments, the methods and processes described herein may be tied to a computing system of one or more computing devices. In particular, such methods and processes may be implemented as a computer-application program or service, an application-programming interface (API), a library, and/or other computer-program product.

FIG. 8 schematically shows a non-limiting embodiment of a computing system 800 that can enact one or more of the methods and processes described above. Computing system 800 is shown in simplified form. Computing system 800 may embody the computing system 102, the camera(s) 118, the data warehouse 172, the assembly robot(s) 174, and the human technician device(s) 176 described above and illustrated in FIG. 1. Computing system 800 may take the form of one or more personal computers, server computers, tablet computers, home-entertainment computers, network computing devices, gaming devices, mobile computing devices, mobile communication devices (e.g., smart phone), edge device configured to run real-time analysis, and/or other computing devices, and wearable computing devices such as smart wristwatches and head mounted augmented reality devices.

Computing system 800 includes a logic processor 802 volatile memory 804, and a non-volatile storage device 806. Computing system 800 may optionally include a display subsystem 808, input subsystem 810, communication subsystem 812, and/or other components not shown in FIG. 8.

Logic processor 802 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 802 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 806 includes one or more physical devices configured to hold instructions executable by the logic processors to implement the methods and processes described herein. When such methods and processes are implemented, the state of non-volatile storage device 806 may be transformed-e.g., to hold different data.

Non-volatile storage device 806 may include physical devices that are removable and/or built-in. Non-volatile storage device 806 may include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 806 may include nonvolatile, dynamic, static, read/write, read-only, sequential-access, location-addressable, file-addressable, and/or content-addressable devices. It will be appreciated that non-volatile storage device 806 is configured to hold instructions even when power is cut to the non-volatile storage device 806.

Volatile memory 804 may include physical devices that include random access memory. Volatile memory 804 is typically utilized by logic processor 802 to temporarily store information during processing of software instructions. It will be appreciated that volatile memory 804 typically does not continue to store instructions when power is cut to the volatile memory 804.

Aspects of logic processor 802, volatile memory 804, and non-volatile storage device 806 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 800 typically implemented in software by a processor to perform a particular function using portions of volatile memory, which function involves transformative processing that specially configures the processor to perform the function. Thus, a module, program, or engine may be instantiated via logic processor 802 executing instructions held by non-volatile storage device 806, using portions of volatile memory 804. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 808 may be used to present a visual representation of data held by non-volatile storage device 806. The visual representation may take the form of a graphical user interface (GUI). As the herein described methods and processes change the data held by the non-volatile storage device, and thus transform the state of the non-volatile storage device, the state of display subsystem 808 may likewise be transformed to visually represent changes in the underlying data. Display subsystem 808 may include one or more display devices utilizing virtually any type of technology. Such display devices may be combined with logic processor 802, volatile memory 804, and/or non-volatile storage device 806 in a shared enclosure, or such display devices may be peripheral display devices.

When included, input subsystem 810 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; and/or another suitable sensor.

When included, communication subsystem 812 may be configured to communicatively couple various computing devices described herein with each other, and with other devices. Communication subsystem 812 may include wired and/or wireless communication devices compatible with one or more different communication protocols. As non-limiting examples, the communication subsystem may be configured for communication via a wireless telephone network, or a wired or wireless local- or wide-area network, such as a HDMI over Wi-Fi connection. In some embodiments, the communication subsystem may allow computing system 800 to send and/or receive messages to and/or from other devices via a network such as the Internet.

Further, the disclosure comprises configurations according to the following examples.

In one example, a computing system comprises one or more processors configured to execute instructions stored in memory to receive a build plan for an aircraft structure specifying a plurality of expected locations of an expected plurality of holes, tacks, and/or fasteners on the aircraft structure, receive a plurality of digital images of the aircraft structure from one or more cameras, generate a stitched digital image of the aircraft structure via a stitched image generation module based at least on the plurality of digital images and the build plan, determine a plurality of regions of interest (ROIs) of the stitched digital image, for each of the plurality of ROIs, input the corresponding ROI into an object detection machine learning (ML) model to thereby identify a plurality of actual locations of a plurality of actual holes, tacks, and/or fasteners on the aircraft structure in the corresponding ROI, generate a condition of assembly report for the aircraft structure that includes discrepancies between the plurality of actual locations and the plurality of expected locations, generate one or more event notifications for the aircraft structure based at least on the condition of assembly report, wherein the one or more event notifications indicate one or more remedial actions to be taken based at least on the discrepancies, and output the one or more event notifications. In this example and/or other examples, the one or more cameras maybe configured to project a plurality of landmark features on the aircraft structure, the plurality of landmark features may be captured in the plurality of digital images of the aircraft structure, and the stitched digital image generation module may be configured to generate the stitched digital image of the aircraft structure based at least on aligning the plurality of landmark features between neighboring digital images of the plurality of digital images. In this example and/or other examples, the stitched digital image generation module may be configured to execute a feature extraction ML model that is configured to extract aircraft-specific features from the plurality of digital images, the feature extraction ML model may be trained based at least on a set of training digital images of a plurality of different aircraft structures that are labeled with aircraft-specific features and hole-based layout features, and the stitched digital image generation module may be configured to generate the stitched digital image based at least on the aircraft-specific features output by the feature extraction ML model. In this example and/or other examples, the object detection ML model may be further configured to, for each of the plurality of ROIs, identify locations of foreign object debris on the aircraft structure in the corresponding ROI, the condition of assembly report may further include the identified locations of the foreign object debris on the aircraft structure, and the one or more remedial actions may include sending one or more commands to remove the foreign object debris from the identified locations. In this example and/or other examples, the object detection ML model may be further configured to, for each of the plurality of ROIs, identify locations of defects in the plurality of holes, tacks, and/or fasteners in the corresponding ROI, the condition of assembly report may further include the identified locations of defects in the holes, tacks, and/or fasteners on the aircraft structure, and the one or more remedial actions may include sending one or more commands to fix the defects in the holes, tacks, and/or fasteners at the identified locations on the aircraft structure. In this example and/or other examples, the object detection ML model may be further configured to generate one or more masked digital images of ROIs of the aircraft structure in which the discrepancies are highlighted with visual markers, and the one or more processors may be configured to execute instructions stored in memory to output the one or more masked digital images. In this example and/or other examples, the discrepancies may include identifying that a hole is not present at an expected location on the aircraft structure, and the one or more remedial actions may include sending a command to drill a hole at the expected location on the aircraft structure. In this example and/or other examples, the one or more remedial actions may include sending a command to halt a filling operation performed at the expected location of the hole until the hole can be drilled at the expected location. In this example and/or other examples, the one or more processors may be configured to execute instructions stored in memory to compare the condition of assembly report for the aircraft structure to a prior condition of assembly report for the aircraft structure to verify that prior discrepancies have been corrected since the prior condition of assembly report was generated, and based on identifying that a prior discrepancy has not been corrected, generate one or more additional event notifications indicating one or more additional remedial actions to correct the prior discrepancy.

In another example, a computer-implemented method comprises receiving a build plan for an aircraft structure specifying a plurality of expected locations of an expected plurality of holes, tacks, and/or fasteners on the aircraft structure, receiving a plurality of digital images of the aircraft structure from one or more cameras, generating a stitched digital image of the aircraft structure via a stitched digital image generation module based at least on the plurality of digital images and the build plan, determining a plurality of regions of interest (ROIs) of the stitched digital image, for each of the plurality of ROIs, inputting the corresponding ROI into an object detection machine learning (ML) model to thereby identify a plurality of actual locations of a plurality of actual holes, tacks, and/or fasteners on the aircraft structure in the corresponding ROI, generating a condition of assembly report for the aircraft structure that includes discrepancies between the plurality of actual locations and the plurality of expected locations, generating one or more event notifications for the aircraft structure based at least on the condition of assembly report, wherein the one or more event notifications indicate one or more remedial actions to be taken based at least on the discrepancies, and outputting the one or more event notifications. In this example and/or other examples, the one or more cameras may be configured to project a plurality of landmark features on the aircraft structure, the plurality of landmark features may be captured in the plurality of digital images of the aircraft structure, and the stitched digital image generation module may be configured to generate the stitched digital image of the aircraft structure based at least on aligning the plurality of landmark features between neighboring digital images of the plurality of digital images. In this example and/or other examples, the stitched digital image generation module may be configured to execute a feature extraction ML model that is configured to extract aircraft-specific features from the plurality of digital images, the feature extraction ML model may be trained based at least on a set of training digital images of a plurality of different aircraft structures that are labeled with aircraft-specific features and hole-based layout features, and the stitched digital image generation module may be configured to generate the stitched digital image based at least on the aircraft-specific features output by the feature extraction ML model. In this example and/or other examples, the object detection ML model may be further configured to, for each of the plurality of ROIs, identify locations of foreign object debris on the aircraft structure in the corresponding ROI, the condition of assembly report may further include the identified locations of the foreign object debris on the aircraft structure, and the one or more remedial actions may include sending one or more commands to remove the foreign object debris from the identified locations. In this example and/or other examples, the object detection ML model may be further configured to, for each of the plurality of ROIs, identify locations of defects in the plurality of holes, tacks, and/or fasteners in the corresponding ROI, the condition of assembly report may further include the identified locations of defects in the holes, tacks, and/or fasteners on the aircraft structure, and the one or more remedial actions may include sending one or more commands to fix the defects in the holes, tacks, and/or fasteners at the identified locations on the aircraft structure. In this example and/or other examples, the object detection ML model may be further configured to generate one or more masked digital images of ROIs of the aircraft structure in which the discrepancies are highlighted with visual markers, and the computer-implemented method may further comprise outputting the one or more masked digital images. In this example and/or other examples, the discrepancies may include identifying that a hole is not present at an expected location on the aircraft structure, and the one or more remedial actions may include sending a command to drill a hole at the expected location on the aircraft structure. In this example and/or other examples, the one or more remedial actions may include sending a command to halt a filling operation performed at the expected location of the hole until the hole can be drilled at the expected location. In this example and/or other examples, the computer-implemented method may further comprise comparing the condition of assembly report for the aircraft structure to a prior condition of assembly report for the aircraft structure to verify that prior discrepancies have been corrected since the prior condition of assembly report was generated, and based on identifying that a prior discrepancy has not been corrected, generating one or more additional event notifications indicating one or more additional remedial actions to correct the prior discrepancy.

In yet another example, a computing system comprises one or more processors configured to execute instructions stored in memory to receive a build plan for an aircraft structure specifying a plurality of expected locations of an expected plurality of holes, tacks, and/or fasteners on the aircraft structure, receive a plurality of digital images of the aircraft structure from one or more cameras, generate a stitched digital image of the aircraft structure via a stitched digital image generation module based at least on the plurality of digital images and the build plan, input the stitched digital image into an object detection machine learning (ML) model to thereby identify a plurality of actual locations of a plurality of actual holes, tacks, and/or fasteners on the aircraft structure in the stitched digital image, generate a condition of assembly report for the aircraft structure that includes discrepancies between the plurality of actual locations and the plurality of expected locations, generate one or more event notifications for the aircraft structure based at least on the condition of assembly report, wherein the one or more event notifications indicate one or more remedial actions to be taken based at least on the discrepancies, and output the one or more event notifications. In this example and/or other examples, the one or more processors may be configured to execute instructions stored in memory to determine a plurality of regions of interest (ROIs) of the stitched digital image, and for each of the plurality of ROIs, input the corresponding ROI into the object detection ML model to thereby identify a plurality of actual locations of a plurality of actual holes, tacks, and/or fasteners on the aircraft structure in the corresponding ROI, the condition of assembly report for the aircraft structure may include discrepancies between the plurality of actual locations and the plurality of expected locations in the plurality or ROIs.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

The description includes the following clauses:
1. A computing system, comprising:
   one or more processors configured to execute instructions stored in memory to:
   receive a build plan for an aircraft structure specifying a plurality of expected locations of an expected plurality of holes, tacks, and/or fasteners on the aircraft structure;
   receive a plurality of digital images of the aircraft structure from one or more cameras;
   generate a stitched digital image of the aircraft structure via a stitched image generation module based at least on the plurality of digital images and the build plan;
   determine a plurality of regions of interest (ROIs) of the stitched digital image;
   for each of the plurality of ROIs, input the corresponding ROI into an object detection machine learning (ML) model to thereby identify a plurality of actual locations of a plurality of actual holes, tacks, and/or fasteners on the aircraft structure in the corresponding ROI;
   generate a condition of assembly report for the aircraft structure that includes discrepancies between the plurality of actual locations and the plurality of expected locations;
   generate one or more event notifications for the aircraft structure based at least on the condition of assembly report, wherein the one or more event notifications indicate one or more remedial actions to be taken based at least on the discrepancies; and
   output the one or more event notifications.
2. The computing system of clause 1, wherein the one or more cameras are configured to project a plurality of landmark features on the aircraft structure, wherein the plurality of landmark features are captured in the plurality of digital images of the aircraft structure, and wherein the stitched digital image generation module is configured to generate the stitched digital image of the aircraft structure based at least on aligning the plurality of landmark features between neighboring digital images of the plurality of digital images.
3. The computing system of clause 1 or clause 2, wherein the stitched digital image generation module is configured to execute a feature extraction ML model that is configured to extract aircraft-specific features from the plurality of digital images, wherein the feature extraction ML model is trained based at least on a set of training digital images of a plurality of different aircraft structures that are labeled with aircraft-specific features and hole-based layout features, and wherein the stitched digital image generation module is configured to generate the stitched digital image based at least on the aircraft-specific features output by the feature extraction ML model.
4. The computing system of any of clauses 1 to 3, wherein the object detection ML model is further configured to, for each of the plurality of ROIs, identify locations of foreign object debris on the aircraft structure in the corresponding ROI, wherein the condition of assembly report further includes the identified locations of the foreign object debris on the aircraft structure, and wherein the one or more remedial actions include sending one or more commands to remove the foreign object debris from the identified locations.
5. The computing system of any of clauses 1 to 4, wherein the object detection ML model is further configured to, for each of the plurality of ROIs, identify locations of defects in the plurality of holes, tacks, and/or fasteners in the corresponding ROI, wherein the condition of assembly report further includes the identified locations of defects in the holes, tacks, and/or fasteners on the aircraft structure, and wherein the one or more remedial actions include sending one or more commands to fix the defects in the holes, tacks, and/or fasteners at the identified locations on the aircraft structure.
6. The computing system of any of clauses 1 to 5, wherein the object detection ML model is further configured to generate one or more masked digital images of ROIs of the aircraft structure in which the discrepancies are highlighted with visual markers, and wherein the one or more processors are configured to execute instructions stored in memory to:
   output the one or more masked digital images.
7. The computing system of any of clauses 1 to 6, wherein the discrepancies include identifying that a hole is not present at an expected location on the aircraft structure, and wherein the one or more remedial actions include sending a command to drill a hole at the expected location on the aircraft structure.
8. The computing system of clause 7, the one or more remedial actions include sending a command to halt a filling operation performed at the expected location of the hole until the hole can be drilled at the expected location.
9. The computing system of any of clauses 1 to 8, wherein the one or more processors are configured to execute instructions stored in memory to:
   compare the condition of assembly report for the aircraft structure to a prior condition of assembly report for the aircraft structure to verify that prior discrepancies have been corrected since the prior condition of assembly report was generated; and
   based on identifying that a prior discrepancy has not been corrected, generate one or more additional event notifications indicating one or more additional remedial actions to correct the prior discrepancy.
10. A computer-implemented method, comprising:
   receiving a build plan for an aircraft structure specifying a plurality of expected locations of an expected plurality of holes, tacks, and/or fasteners on the aircraft structure;
   receiving a plurality of digital images of the aircraft structure from one or more cameras;
   generating a stitched digital image of the aircraft structure via a stitched digital image generation module based at least on the plurality of digital images and the build plan;
   determining a plurality of regions of interest (ROIs) of the stitched digital image;
   for each of the plurality of ROIs, inputting the corresponding ROI into an object detection machine learning (ML) model to thereby identify a plurality of actual locations of a plurality of actual holes, tacks, and/or fasteners on the aircraft structure in the corresponding ROI;
   generating a condition of assembly report for the aircraft structure that includes discrepancies between the plurality of actual locations and the plurality of expected locations;
   generating one or more event notifications for the aircraft structure based at least on the condition of assembly report, wherein the one or more event notifications indicate one or more remedial actions to be taken based at least on the discrepancies; and
   outputting the one or more event notifications.
11. The computer-implemented method of clause 10, wherein the one or more cameras are configured to project a plurality of landmark features on the aircraft structure, wherein the plurality of landmark features are captured in the plurality of digital images of the aircraft structure, and wherein the stitched digital image generation module is configured to generate the stitched digital image of the aircraft structure based at least on aligning the plurality of landmark features between neighboring digital images of the plurality of digital images.
12. The computer-implemented method of clause 10 or clause 11, wherein the stitched digital image generation module is configured to execute a feature extraction ML model that is configured to extract aircraft-specific features from the plurality of digital images, wherein the feature extraction ML model is trained based at least on a set of training digital images of a plurality of different aircraft structures that are labeled with aircraft-specific features and hole-based layout features, and wherein the stitched digital image generation module is configured to generate the stitched digital image based at least on the aircraft-specific features output by the feature extraction ML model.
13. The computer-implemented method of any of clauses 10 to 12, wherein the object detection ML model is further configured to, for each of the plurality of ROIs, identify locations of foreign object debris on the aircraft structure in the corresponding ROI, wherein the condition of assembly report further includes the identified locations of the foreign object debris on the aircraft structure, and wherein the one or more remedial actions include sending one or more commands to remove the foreign object debris from the identified locations.
14. The computer-implemented method of any of clauses 10 to 13, wherein the object detection ML model is further configured to, for each of the plurality of ROIs, identify locations of defects in the plurality of holes, tacks, and/or fasteners in the corresponding ROI, wherein the condition of assembly report further includes the identified locations of defects in the holes, tacks, and/or fasteners on the aircraft structure, and wherein the one or more remedial actions include sending one or more commands to fix the defects in the holes, tacks, and/or fasteners at the identified locations on the aircraft structure.
15. The computer-implemented method of any of clauses 10 to 14, wherein the object detection ML model is further configured to generate one or more masked digital images of ROIs of the aircraft structure in which the discrepancies are highlighted with visual markers, and wherein the computer-implemented method further comprises outputting the one or more masked digital images.
16. The computer-implemented method of any of clauses 10 to 15, wherein the discrepancies include identifying that a hole is not present at an expected location on the aircraft structure, and wherein the one or more remedial actions include sending a command to drill a hole at the expected location on the aircraft structure.
17. The computer-implemented method of clause 16, the one or more remedial actions include sending a command to halt a filling operation performed at the expected location of the hole until the hole can be drilled at the expected location.
18. The computer-implemented method of any of clauses 10 to 17, further comprising:
   comparing the condition of assembly report for the aircraft structure to a prior condition of assembly report for the aircraft structure to verify that prior discrepancies have been corrected since the prior condition of assembly report was generated; and
   based on identifying that a prior discrepancy has not been corrected, generating one or more additional event notifications indicating one or more additional remedial actions to correct the prior discrepancy.
19. A computing system, comprising:
   one or more processors configured to execute instructions stored in memory to:
   receive a build plan for an aircraft structure specifying a plurality of expected locations of an expected plurality of holes, tacks, and/or fasteners on the aircraft structure;
   receive a plurality of digital images of the aircraft structure from one or more cameras;
   generate a stitched digital image of the aircraft structure via a stitched digital image generation module based at least on the plurality of digital images and the build plan;
   input the stitched digital image into an object detection machine learning (ML) model to thereby identify a plurality of actual locations of a plurality of actual holes, tacks, and/or fasteners on the aircraft structure in the stitched digital image;
   generate a condition of assembly report for the aircraft structure that includes discrepancies between the plurality of actual locations and the plurality of expected locations;
   generate one or more event notifications for the aircraft structure based at least on the condition of assembly report, wherein the one or more event notifications indicate one or more remedial actions to be taken based at least on the discrepancies; and
   output the one or more event notifications.
20. The computing system of clause 19, wherein the one or more processors are configured to execute instructions stored in memory to:
   determine a plurality of regions of interest (ROIs) of the stitched digital image; and
   for each of the plurality of ROIs, input the corresponding ROI into the object detection ML model to thereby identify a plurality of actual locations of a plurality of actual holes, tacks, and/or fasteners on the aircraft structure in the corresponding ROI, wherein the condition of assembly report for the aircraft structure includes discrepancies between the plurality of actual locations and the plurality of expected locations in the plurality or ROIs.

## Claims

1. A computing system (102), comprising:
one or more processors (106) configured to execute instructions stored in memory (108) to:
receive a build plan (110) for an aircraft structure (104) specifying a plurality of expected locations (112) of an expected plurality of holes, tacks, and/or fasteners (114) on the aircraft structure (104);
receive a plurality of digital images (116) of the aircraft structure (104) from one or more cameras (118);
generate a stitched digital image (122) of the aircraft structure (104) via a stitched image generation module (120) based at least on the plurality of digital images (116) and the build plan (110);
determine a plurality of regions of interest (ROIs) (136) of the stitched digital image (122);
for each of the plurality of ROIs (136), input the corresponding ROI into an object detection machine learning (ML) model (138) to thereby identify a plurality of actual locations (146) of a plurality of actual holes, tacks, and/or fasteners (148) on the aircraft structure (104) in the corresponding ROI (136);
generate a condition of assembly report (140) for the aircraft structure (104) that includes discrepancies (150) between the plurality of actual locations (146) and the plurality of expected locations (112);
generate one or more event notifications (168) for the aircraft structure (104) based at least on the condition of assembly report(140), wherein the one or more event notifications (168) indicate one or more remedial actions (170) to be taken based at least on the discrepancies (150); and
output the one or more event notifications (160).

2. The computing system (102) of claim 1, wherein the one or more cameras (118) are configured to project a plurality of landmark features (130) on the aircraft structure (104), wherein the plurality of landmark features (130) are captured in the plurality of digital images (116) of the aircraft structure (104), and wherein the stitched digital image generation module (120) is configured to generate the stitched digital image (122) of the aircraft structure (104) based at least on aligning the plurality of landmark features (130) between neighboring digital images of the plurality of digital images (116).

3. The computing system (102) of claim 1 or claim 2, wherein the stitched digital image generation module (120) is configured to execute a feature extraction ML model (124) that is configured to extract aircraft-specific features from the plurality of digital images (116), wherein the feature extraction ML model (124) is trained based at least on a set of training digital images of a plurality of different aircraft structures that are labeled with aircraft-specific features and hole-based layout features, and wherein the stitched digital image generation module (120) is configured to generate the stitched digital image (122) based at least on the aircraft-specific features output by the feature extraction ML model (124).

4. The computing system (102) of any of claims 1 to 3, wherein the object detection ML model (138) is further configured to, for each of the plurality of ROIs (136), identify locations (158) of foreign object debris (160) on the aircraft structure (104) in the corresponding ROI (136), wherein the condition of assembly report (140) further includes the identified locations (158) of the foreign object debris (160) on the aircraft structure (104), and wherein the one or more remedial actions (170) include sending one or more commands to remove the foreign object debris (160) from the identified locations (158).

5. The computing system (102) of any of claims 1 to 4, wherein the object detection ML model (138) is further configured to, for each of the plurality of ROIs (136), identify locations of defects (150) in the plurality of holes, tacks, and/or fasteners in the corresponding ROI (136), wherein the condition of assembly report (140) further includes the identified locations of defects (150) in the holes, tacks, and/or fasteners on the aircraft structure (104), and wherein the one or more remedial actions (170) include sending one or more commands to fix the defects (150) in the holes, tacks, and/or fasteners at the identified locations on the aircraft structure (104).

6. The computing system (102) of any of claims 1 to 5, wherein the object detection ML model (138) is further configured to generate one or more masked digital images (164) of ROIs (136) of the aircraft structure (104) in which the discrepancies (150) are highlighted with visual markers (300.1-4), and wherein the one or more processors (106) are configured to execute instructions stored in memory (108) to:
output the one or more masked digital images (164).

7. The computing system (102) of any of claims 1 to 6, wherein the discrepancies (150) include identifying that a hole (148) is not present at an expected location (112) on the aircraft structure (104), and wherein the one or more remedial actions (170) include sending a command to drill a hole at the expected location (112) on the aircraft structure (104).

8. The computing system (102) of claim 7, the one or more remedial actions (170) include sending a command to halt a filling operation performed at the expected location (112) of the hole until the hole can be drilled at the expected location (112).

9. The computing system (102) of any of claims 1 to 8, wherein the one or more processors (106) are configured to execute instructions stored in memory (108) to:
compare the condition of assembly report (140) for the aircraft structure (104) to a prior condition of assembly report for the aircraft structure (104) to verify that prior discrepancies have been corrected since the prior condition of assembly report was generated; and
based on identifying that a prior discrepancy has not been corrected, generate one or more additional event notifications (168) indicating one or more additional remedial actions (170) to correct the prior discrepancy.

10. A computer-implemented method (600), comprising:
receiving a build plan (110) for an aircraft structure (104) specifying a plurality of expected locations (112) of an expected plurality of holes, tacks, and/or fasteners (114) on the aircraft structure (104);
receiving a plurality of digital images (116) of the aircraft structure (104) from one or more cameras (118);
generating a stitched digital image (122) of the aircraft structure (104) via a stitched digital image generation module (120) based at least on the plurality of digital images (116) and the build plan (110);
determining a plurality of regions of interest (ROIs) (136) of the stitched digital image (122);
for each of the plurality of ROIs (136), inputting the corresponding ROI (136) into an object detection machine learning (ML) model (138) to thereby identify a plurality of actual locations (146) of a plurality of actual holes, tacks, and/or fasteners (148) on the aircraft structure (104) in the corresponding ROI (136);
generating a condition of assembly report (140) for the aircraft structure (104) that includes discrepancies (150) between the plurality of actual locations (146) and the plurality of expected locations (112);
generating one or more event notifications (168) for the aircraft structure (104) based at least on the condition of assembly report (140), wherein the one or more event notifications (168) indicate one or more remedial actions (170) to be taken based at least on the discrepancies (150); and
outputting the one or more event notifications (168).

11. The computer-implemented method (600) of claim 10, wherein the one or more cameras (118) are configured to project a plurality of landmark features (130) on the aircraft structure (104), wherein the plurality of landmark features (130) are captured in the plurality of digital images (116) of the aircraft structure (104), and wherein the stitched digital image generation module (120) is configured to generate the stitched digital image (122) of the aircraft structure (104) based at least on aligning the plurality of landmark features (130) between neighboring digital images of the plurality of digital images (116), and/or, wherein the stitched digital image generation module (120) is configured to execute a feature extraction ML model (124) that is configured to extract aircraft-specific features from the plurality of digital images (116), wherein the feature extraction ML model (124) is trained based at least on a set of training digital images of a plurality of different aircraft structures that are labeled with aircraft-specific features and hole-based layout features, and wherein the stitched digital image generation module (120) is configured to generate the stitched digital image (122) based at least on the aircraft-specific features output by the feature extraction ML model (126), and/or, wherein the object detection ML model (138) is further configured to, for each of the plurality of ROIs (136), identify locations (158) of foreign object debris (160) on the aircraft structure (104) in the corresponding ROI (136), wherein the condition of assembly report (140) further includes the identified locations (158) of the foreign object debris (160) on the aircraft structure (104), and wherein the one or more remedial actions (170) include sending one or more commands to remove the foreign object debris (160) from the identified locations (158), and/or, wherein the object detection ML model (138) is further configured to, for each of the plurality of ROIs (136), identify locations of defects (156) in the plurality of holes, tacks, and/or fasteners in the corresponding ROI (136), wherein the condition of assembly report (140) further includes the identified locations of defects (150) in the holes, tacks, and/or fasteners on the aircraft structure (104), and wherein the one or more remedial actions (170) include sending one or more commands to fix the defects (150) in the holes, tacks, and/or fasteners at the identified locations on the aircraft structure (104), and/or, wherein the object detection ML model (138) is further configured to generate one or more masked digital images (104) of ROIs (136) of the aircraft structure (104) in which the discrepancies (150) are highlighted with visual markers (300.1-4), and wherein the computer-implemented method (600) further comprises outputting the one or more masked digital images (164).

12. The computer-implemented method (600) of claim 10 or claim 11, wherein the discrepancies(150) include identifying that a hole is not present at an expected location (112) on the aircraft structure (104), and wherein the one or more remedial actions (170) include sending a command to drill a hole at the expected location (112) on the aircraft structure (104), optionally, the one or more remedial actions (170) include sending a command to halt a filling operation performed at the expected location (112) of the hole until the hole can be drilled at the expected location (112).

13. The computer-implemented method (600) of any of claims 10 to 12, further comprising:
comparing the condition of assembly report (140) for the aircraft structure (104) to a prior condition of assembly report for the aircraft structure (104) to verify that prior discrepancies have been corrected since the prior condition of assembly report was generated; and
based on identifying that a prior discrepancy has not been corrected, generating one or more additional event notifications (168) indicating one or more additional remedial actions (170) to correct the prior discrepancy.

14. A computing system (102), comprising:
one or more processors (106) configured to execute instructions stored in memory (108) to:
receive a build plan (110) for an aircraft structure (104) specifying a plurality of expected locations (112) of an expected plurality of holes, tacks, and/or fasteners (114) on the aircraft structure (104);
receive a plurality of digital images (116) of the aircraft structure (104) from one or more cameras (118);
generate a stitched digital image (122) of the aircraft structure (104) via a stitched digital image generation module (120) based at least on the plurality of digital images (116) and the build plan (110);
input the stitched digital image (122) into an object detection machine learning (ML) model (136) to thereby identify a plurality of actual locations (146) of a plurality of actual holes, tacks, and/or fasteners (148) on the aircraft structure (104) in the stitched digital image (122);
generate a condition of assembly report (140) for the aircraft structure (104) that includes discrepancies (150) between the plurality of actual locations (146) and the plurality of expected locations (112);
generate one or more event notifications (168) for the aircraft structure (104) based at least on the condition of assembly report (140), wherein the one or more event notifications (168) indicate one or more remedial actions (170) to be taken based at least on the discrepancies (150); and
output the one or more event notifications (168).

15. The computing system (102) of claim 14, wherein the one or more processors (106) are configured to execute instructions stored in memory (108) to:
determine a plurality of regions of interest (ROIs) (136) of the stitched digital image (122); and
for each of the plurality of ROIs (136), input the corresponding ROI (136) into the object detection ML model (138) to thereby identify a plurality of actual locations (146) of a plurality of actual holes, tacks, and/or fasteners (148) on the aircraft structure (104) in the corresponding ROI (136), wherein the condition of assembly report (140) for the aircraft structure (104) includes discrepancies (150) between the plurality of actual locations (146) and the plurality of expected locations (112) in the plurality or ROIs (136).
